# EUROPEAN PATENT APPLICATION

(11) **EP 4 814 864 A1**
(43) Date of publication of application: **30.09.2026**
(21) Application number: 25227114.3
(22) Date of filing: 23.12.2025
(51) Int. Cl.: G06T 7/00, G01N 21/88

(54) **APPARATUS AND METHOD FOR INSPECTING OBJECT**

(30) Priority: 25.03.2025 KR 20250038033
(71) Applicant: SAMSUNG SDI CO., LTD., Yongin-si, Gyeonggi-do 17084 (KR)
(72) Inventor: LAGUNOVSKY, Dmitry, 16678 Suwon-si (KR); CHOI, Ha Hyun, 16678 Suwon-si (KR); HWANG, Sun Uk, 16678 Suwon-si (KR)
(74) Representative: Marks & Clerk LLP

(57) **Abstract**

An apparatus and a method for inspecting an object are disclosed. A method of inspecting an object includes, when defects of a battery are inspected using a line scan camera, a plurality of one-dimensional images consecutively generated when an object is scanned in a unit of lines are combined to generate a two-dimensional local image, the generated two-dimensional local image is preprocessed, and then defects of the object are detected based on the preprocessed two-dimensional local image, and a line unit scanning operation of generating a one-dimensional image and a preprocessing operation of a two-dimensional local image are performed in parallel, or concurrently or simultaneously.

## Description

### BACKGROUND

### 1. Field

Aspects of embodiments of the present disclosure relate to an apparatus and method for inspecting an object.

### 2. Description of the Related Art

Unlike primary batteries that cannot be charged, secondary batteries are batteries that can be charged and discharged. Low-capacity secondary batteries may be used in small portable electronic devices, such as smartphones, feature phones, laptop computers, digital cameras, and camcorders, and high-capacity secondary batteries are widely used as driving power sources and power storage batteries for motors in hybrid vehicles, electric vehicles, and the like. Such a secondary battery includes an electrode assembly including a positive electrode and a negative electrode, a case for accommodating the same, and an electrode terminal connected to the electrode assembly.

The above information disclosed in this Background section is provided for enhancement of understanding of the background of the present disclosure, and may contain information that does not constitute related (or prior) art.

### SUMMARY

According to an aspect of embodiments of the present disclosure, an apparatus and method for inspecting an object (for example, a secondary battery), which is capable of improving production per minute (PPM) by shortening a time required for defect inspection (for example, vision inspection of cracks, bubbles, or incomplete welding of welds in an electrode and a tab) performed during a manufacturing process of an object are provided.

However, aspects and objects of the present invention are not limited to the above-described aspects and objects and other aspects and objects that are not described may be clearly understood by those skilled in the art from the following description.

According to one or more embodiments of the present invention, an apparatus for inspecting an object includes a vision sensor configured to scan a moving object in a unit of lines to generate a one-dimensional image, and a processor configured to generate a plurality of two-dimensional local images of the object by combining N one-dimensional images consecutively generated by the vision sensor to generate a two-dimensional local image, preprocess each of the plurality of generated two-dimensional local images, and detect defects of the object based on the plurality of preprocessed two-dimensional local images, wherein N is a natural number greater than or equal to 2.

The vision sensor may be configured to scan the object in a unit of lines a plurality of times to generate a plurality of one-dimensional images, and the processor may generate the plurality of two-dimensional local images of the object by repeatedly performing an operation of generating the one two-dimensional local image when the N one-dimensional images are generated by the vision sensor.

The apparatus may further include a memory including a buffer, the one-dimensional image generated by the vision sensor may be stored in the buffer, and when the N one-dimensional images are stored in the buffer, the processor may read the N one-dimensional images from the buffer and may combine the N one-dimensional images to generate the one two-dimensional local image and then may preprocess the generated two-dimensional local image.

The processor may preprocess each of the plurality of two-dimensional local images by repeatedly performing an operation of reading the N one-dimensional images from the buffer, combining the N one-dimensional images to generate the one two-dimensional local image, and then preprocessing the one two-dimensional local image when the N one-dimensional images are stored in the buffer.

When a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are for generating the second two-dimensional local image, may be performed in parallel.

The processor may perform the preprocessing by removing noise from a defect inspection portion of the object by applying a two-dimensional filtering algorithm to each two-dimensional local image.

When the preprocessing of the plurality of two-dimensional local images is completed, the processor may combine the plurality of preprocessed two-dimensional local images to generate a two-dimensional global image showing an entire exterior of the object and may detect the defects of the object using the generated two-dimensional global image.

The processor may detect the defects of the object by inputting the two-dimensional global image to a neural network model pre-trained to detect the defects of the object and checking an output thereof.

The vision sensor may include a line scan camera, the object may include a battery which moves through a conveyor in a manufacturing process, and the defects of the object may include defects of a weld of the battery.

According to one or more embodiments of the present invention, a method of inspecting an object includes generating, by a processor, a plurality of two-dimensional local images of an object by combining N one-dimensional images, which are consecutively generated by a vision sensor configured to scan a moving object in a unit of lines and generate a one-dimensional image, to generate a two-dimensional local image, and preprocessing each of the plurality of generated two-dimensional local images, and detecting, by the processor, defects of the object based on the plurality of preprocessed two-dimensional local images.

The vision sensor may be configured to scan the object in a unit of lines a plurality of times to generate a plurality of one-dimensional images, and, in the preprocessing, the processor may generate the plurality of two-dimensional local images of the object by repeatedly performing an operation of generating a two-dimensional local image when the N one-dimensional images are generated by the vision sensor.

The one-dimensional image generated by the vision sensor may be stored in a buffer, and, in the preprocessing, when the N one-dimensional images are stored in the buffer, the processor may read the N one-dimensional images from the buffer and may combine the N one-dimensional images to generate the one two-dimensional local image and then may preprocess the generated two-dimensional local image.

In the preprocessing, the processor may preprocess each of the plurality of two-dimensional local images by repeatedly performing an operation of reading the N one-dimensional images from the buffer, combining the N one-dimensional images to generate the two-dimensional local image, and then preprocessing the two-dimensional local image when the N one-dimensional images are stored in the buffer.

When a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are required for generating the second two-dimensional local image, may be performed in parallel.

In the preprocessing, the processor may perform the preprocessing by removing noise from a defect inspection portion of the object by applying a two-dimensional filtering algorithm to each two-dimensional local image.

In the detecting, the processor may combine the plurality of preprocessed two-dimensional local images to generate a two-dimensional global image showing an entire exterior of the object and may detect the defects of the object using the generated two-dimensional global image.

In the detecting, the processor may detect the defects of the object by inputting the two-dimensional global image to a neural network model pre-trained to detect the defects of the object and checking an output thereof.

At least some of the above and other features of the invention are set out in the claims.

### BRIEF DESCRIPTION OF THE DRAWINGS

The following drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a block diagram illustrating an apparatus for inspecting an object according to an embodiment of the present disclosure;
FIG. 2 is a view illustrating a process of inspecting defects of an object through a vision sensor;
FIG. 3 is a view illustrating a method in which the vision sensor photographs an object in a unit of lines;
FIG. 4 is a view for describing a time required to inspect defects of an object; and
FIG. 5 is a flowchart illustrating a method of inspecting an object according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are some embodiments of the present disclosure and do not necessarily represent all of the technical ideas, aspects, and features of the present disclosure. Accordingly, it is to be understood that there may be various equivalents and modifications that can replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked" or "connected" to another element, the elements may be directly "coupled," "linked" or "connected" to each other, or one or more intervening elements may be present therebetween, through which the element may be "coupled," "linked," or "connected" to another element. In addition, when a part is referred to as being "electrically coupled" to another part, the part can be directly connected to another part, or one or more intervening parts may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

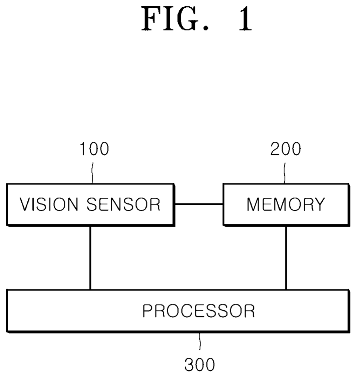

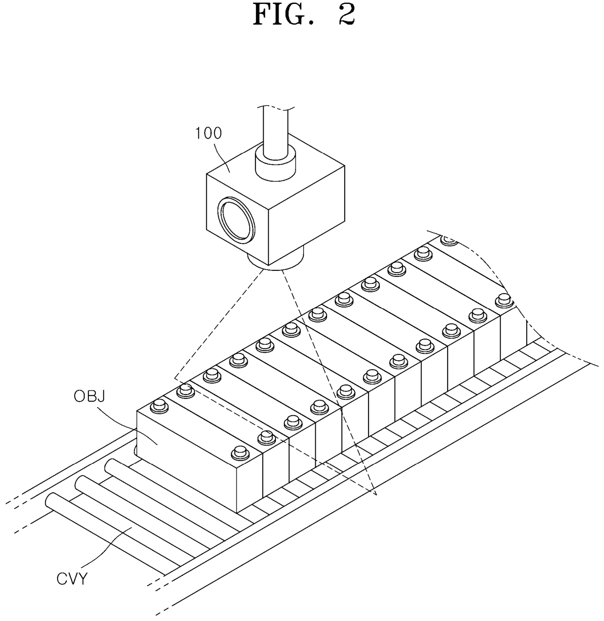

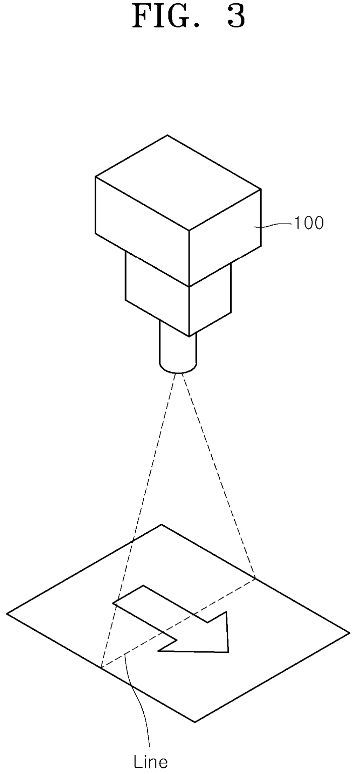

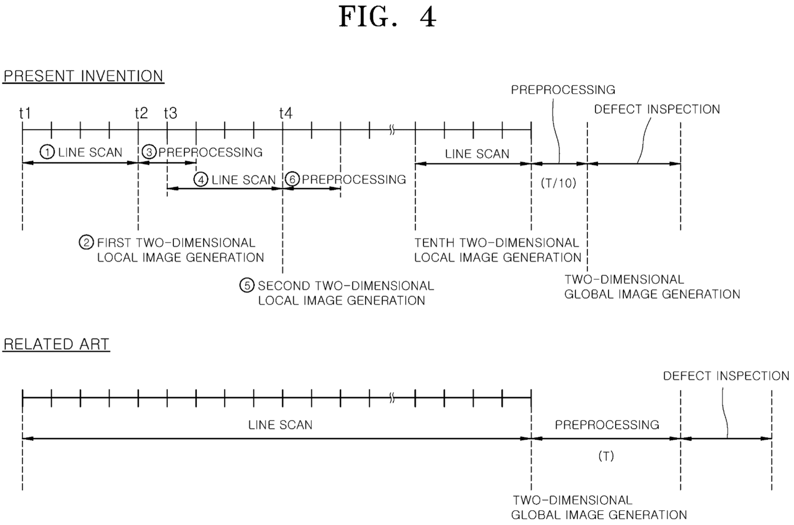

FIG. 1 is a block diagram illustrating an apparatus for inspecting an object according to an embodiment of the present disclosure. FIG. 2 is a view illustrating a process of inspecting defects of an object through a vision sensor. FIG. 3 is a view illustrating a method in which the vision sensor photographs an object in a unit of lines. FIG. 4 is a view for describing a time required to inspect defects of an object.

The apparatus for inspecting an object of FIG. 1 may be configured to inspect defects caused during a manufacturing process of an object OBJ. In the present embodiment, the object OBJ to be inspected may be a battery (for example, a secondary battery), and defects of the object OBJ may be defects of a weld of the battery (for example, cracks, bubbles, or incomplete welding of the weld in an electrode and a tab). FIGS. 2 and 3 illustrate a process of inspecting a weld of a prismatic battery, but in addition to prismatic batteries, various types of batteries, such as cylindrical batteries or pouch-type batteries, may be adopted as batteries to be inspected in the present embodiment. The object OBJ described below may have the same meaning as a battery.

Referring to FIG. 1, the apparatus for inspecting an object of the present embodiment may include a vision sensor 100, a memory 200, and a processor 300.

The vision sensor 100 may scan the object OBJ in a unit of lines to generate a one-dimensional image in a process of moving the object OBJ through a conveyor CVY in a manufacturing process. As shown in FIGS. 2 and 3, the vision sensor 100 may include a line scan camera installed above the object OBJ to capture an image of the object OBJ in a one-dimensional shape (line). That is, the one-dimensional image generated by the vision sensor 100 may be a line-shaped image perpendicular to a direction in which the object OBJ moves through the conveyor CVY. The vision sensor 100 may generate a plurality of one-dimensional images by scanning the object OBJ in a unit of lines a plurality of times while the object OBJ moves. That is, the plurality of one-dimensional images may be generated for one object OBJ. The one-dimensional image generated by the vision sensor 100 may be stored in a buffer of the memory 200 to be described below in real time. The operation of the vision sensor 100 may be controlled by the processor 300 to be described below.

The memory 200 may store at least one command that is executed by the processor 300 during a process of inspecting defects of the object OBJ. The memory 200 may store basic data required for inspecting defects of the object OBJ or may store data generated in a process of inspecting, by the processor 300, defects of the object OBJ, and the processor 300 may access data stored in the memory 200 to inspect defects of the object OBJ. The memory 200 may be implemented as a computer-readable recording medium to operate such that the processor 300 may access the memory 200. In an embodiment, the memory 200 may be implemented as an optical data storage device such as a hard drive, a magnetic tape, a memory card, a read-only memory (ROM), a random-access memory (RAM), a digital video disc (DVD), or an optical disc. In an embodiment, the memory 200 may be allocated with a buffer area (not shown) for storing the one-dimensional image generated by the vision sensor 100. The processor 300 may be configured to access the buffer of the memory 200 and read the one-dimensional image stored in the buffer.

The processor 300 may be a device that inspects defects of the object OBJ, may be implemented as a central processing unit (CPU) or a system-on-chip (SoC), may control a plurality of hardware or software components connected to the processor 300 by running an operating system or application, and may perform processing and calculating on various types of data. The processor 300 may be implemented as a programmable logic controller (PLC) that controls equipment for manufacturing the object OBJ (that is, battery) to integrally operate manufacturing processes of the object OBJ. The processor 300 may be configured to execute at least one instruction stored in the memory 200 and store execution result data in the memory 200.

A typical battery defect inspection using the vision sensor 100 such as a line scan camera includes a process of combining all one-dimensional images generated by the vision sensor 100 in a unit of lines to generate a two-dimensional image showing the entire exterior of a battery, performing preprocessing of removing noise from the two-dimensional image using a noise removal filter, and inspecting defects of the battery by analyzing the two-dimensional image which has been preprocessed.

In such a conventional battery defect inspection method as described above, a target subjected to preprocessing (that is, noise removal) is a two-dimensional image showing the entire exterior of a battery (that is, the entire image of the battery), and, therefore, since a two-dimensional image is generated only when all line scan operations should be completed on the battery, and then a preprocessing operation is enabled, there is a limitation in that defect inspection and manufacturing of the battery are delayed due to a time required for all line scan operations to be completed.

According to one or more embodiments, a defect inspection mechanism capable of shortening a time required for inspecting defects of a battery and manufacturing the battery by removing the above-described "time required for all line scan operations to be completed" through a method of performing a line scan operation of generating a one-dimensional image and a preprocessing operation of removing noise in parallel, which will be described in further detail below.

In order to more clearly understand embodiments, terms are defined as follows.

A "plurality of one-dimensional images" are all one dimensional images generated for the object OBJ. For example, if the number of line scan operations of scanning the entire exterior of the object OBJ is 50, a plurality of one-dimensional images may be one-dimensional images generated through a total of 50 line scan operations.

"N one-dimensional images" are N one-dimensional images consecutively generated through N consecutive line scan operations. N is a natural number greater than or equal to 2 and denotes the number of one-dimensional images combined to generate a two-dimensional local image to be described below. For example, if the number of a "plurality of one-dimensional images" is 50, and N is 5, "N one-dimensional images consecutively generated" may be five consecutive one-dimensional images such as i) first to fifth one-dimensional images, ii) sixth to tenth one-dimensional images, iii) eleventh to fifteenth one-dimensional images, or iv) 46^{th} to 50^{th} one-dimensional images.

A two-dimensional local image is a two-dimensional image that is generated by combining N one-dimensional images as described above and shows a partial area of an exterior of the object OBJ (that is, a local area of the object OBJ). For example, if the number of the "plurality of one-dimensional images" is 50 and N is 5, the first to fifth one-dimensional images may be combined to generate a two-dimensional local image, and the sixth to tenth one-dimensional images may be combined to generate a two-dimensional local image such that a total of ten two-dimensional local images may be generated.

A two-dimensional global image is a two-dimensional image that is generated by combining all two-dimensional local images and shows the entire exterior of the object OBJ (that is, a global area of the object OBJ). In the above example, a total of ten two-dimensional images may be combined to generate a two-dimensional global image.

Based on the above definitions of the terms, an embodiment will be described in further detail.

In a process in which the vision sensor 100 scans the object OBJ in a unit of lines a plurality of times to generate a plurality of one-dimensional images, the processor 300 may generate a plurality of two-dimensional local images of the object OBJ by combining N one-dimensional images consecutively generated by the vision sensor 100 to generate a two-dimensional local image, may preprocess each of the plurality of generated two-dimensional local images, and then may detect defects of the object OBJ based on the plurality of preprocessed two-dimensional local images. That is, a preprocessing operation performed when defects of the object OBJ is inspected may be performed at a "local image" level rather than a "global image" level.

The processor 300 may generate a plurality of two-dimensional local images of the object OBJ by repeatedly performing an operation of generating a two-dimensional local image whenever N one-dimensional images are generated by the vision sensor 100.

In an example in which the number of a plurality of one-dimensional images is 50 and N is 5, when five one-dimensional images are generated at a current time point, the processor 300 may generate a two-dimensional local image by combining currently generated five one-dimensional images without waiting until subsequent five one-dimensional images are generated and may generate a total of ten two-dimensional local images of the object OBJ by repeatedly performing such an operation when five one-dimensional images are subsequently generated.

As described above, the one-dimensional image generated by the vision sensor 100 may be stored in the buffer of the memory 200. When N one-dimensional images are stored in the buffer, the processor 300 may be configured to read the N one-dimensional images from the buffer and combine the N one-dimensional images to generate a two-dimensional local image and then preprocess the generated two-dimensional local image. In this case, the processor 300 may preprocess each of a plurality of two-dimensional local images by repeatedly performing an operation of reading the N one-dimensional images from the buffer and combining the N one-dimensional images to generate the two-dimensional local image and then preprocessing the two-dimensional local image when the N one-dimensional images are stored in the buffer.

For example, when the number of a plurality of one-dimensional images is 50 and N is 5, the processor 300 may generate a total of ten two-dimensional local images by repeatedly perform an operation of reading five one-dimensional images from the buffer, combining the five one-dimensional images to generate one two-dimensional local image and then preprocessing the two-dimensional local image when five one-dimensional images are stored in the buffer.

Such a preprocessing operation of a two-dimensional local image and a line scan operation of the vision sensor 100 for generating N one-dimensional images may be performed in parallel (that is, concurrently, or simultaneously). In an embodiment, when a currently generated two-dimensional local image and a subsequently generated two-dimensional local image are defined as first and second two-dimensional local images, respectively, a preprocessing operation of the first two-dimensional local image by the processor 300 and a line scan operation of generating N one-dimensional images by the vision sensor 100, which is for generating the second two-dimensional local image, may be performed in parallel. The term "in parallel" may mean that at least a portion of a time section during which a preprocessing operation of the first two-dimensional local image is performed overlaps at least a portion of a time section during which a line scan operation of generating N one-dimensional images, by the vision sensor 100, which are for generating the second two-dimensional local image, is performed.

Referring to FIG. 4 (in FIG. 4, a time required for preprocessing is set to 2*t_{scan} (t_{scan} is a time interval between line scan operations), but this is merely an example. A time required for preprocessing may be determined according to a size of a two-dimensional local image and the performance of a two-dimensional filtering algorithm to be described below. In an embodiment, ① Five line scan operations are performed on the object OBJ from a time point t1 to a time point t2 to generate five one-dimensional images such that ② a first two-dimensional local image is generated. ③ After the time point t2, a preprocessing operation of the first two-dimensional local image is performed. ④ Five line scan operations are performed on the object OBJ from a time point t3 to a time point t4 to generate five one-dimensional images such that ⑤ a second two-dimensional local image is generated. ⑥ After the time point t4, a preprocessing operation of the second two-dimensional local image is performed.

That is, a preprocessing operation of the first two-dimensional local image (③ of FIG. 4) and a line scan operation of generating, by the vision sensor 100, N one-dimensional images which are for generating the second two-dimensional local image (④ of FIG. 4), are performed in parallel in a time section between the time point t3 and the time point t4. Accordingly, as shown in FIG. 4, unlike a related art, an image preprocessing operation of removing noise may be performed in a time section in which a line scan operation by the vision sensor 100 is performed, rather than a time period after all line scan operations by the vision sensor 100 are completed, and, thus, a time required for inspecting defects can be shortened, thereby improving production per minute.

In an embodiment, a last two-dimensional local image (that is, a tenth two-dimensional image) is generated through last five line scan operations among a total of 50 line scan operations. As shown in FIG. 4, a preprocessing operation of the tenth two-dimensional local image is performed after all line scan operations are completed, but since a size of the tenth two-dimensional local image is 1/10 of that of a two-dimensional global image showing the entire exterior of the object OBJ, a time required for the preprocessing operation may be also 1/10 of a time required for a preprocessing operation of the two-dimensional global image (that is, 1/M, wherein M is the number of two-dimensional local images), and, thus, a time required for a preprocessing operation can be significantly reduced as compared to a conventional defect inspection method.

Further, in a preprocessing process, the processor 300 may remove noise from a defect inspection portion of the object OBJ by applying a two-dimensional filtering algorithm to each two-dimensional local image, and, in an embodiment, a ghost filter may be adopted for the two-dimensional filtering algorithm. The processor 300 may apply the ghost filter to a two-dimensional local image to remove inherent noise of the vision sensor 100, reflection noise due to light reflection at a weld, or residual image noise caused by the movement of the object OBJ.

The preprocessing of a plurality of two-dimensional local images is completed (that is, the preprocessing of all the two-dimensional local images is completed), the processor 300 may combine the plurality of preprocessed two-dimensional local images to generate a two-dimensional global image showing the entire exterior of the object OBJ and may detect defects of the object OBJ using the generated two-dimensional global image. In an embodiment, the processor 300 may detect defects of the object OBJ by inputting the two-dimensional global image to a pre-trained neural network model to detect defects of the object OBJ and checking the output thereof. The neural network model may be, for example, a convolutional neural network (CNN) model or a deep neural network (DNN) model trained according to a deep learning method by using a two-dimensional global image of a battery without defects of a weld and a two-dimensional global image of a battery with defects of a weld as learning data. A large dataset comprising many examples (e.g. thousands) of two-dimensional global images of a battery without defects and many examples (e.g. thousands) of two-dimensional global images of a battery with defects of a weld may be deployed as learning data. The neural network model may be trained to recognize other forms of defects in two-dimensional global image data by performing training according to a deep learning method on corresponding sets of training data.

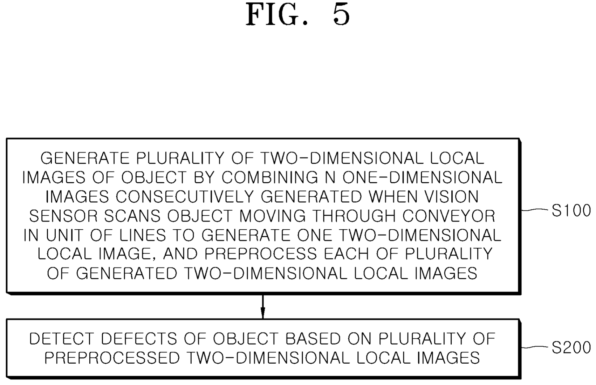

FIG. 5 is a flowchart illustrating a method of inspecting an object according to an embodiment of the present disclosure. The method of inspecting an object according to an embodiment will be described with reference to FIG. 5. Further descriptions of contents that overlap the above-described contents will be omitted, and the description will focus on a time series configuration.

First, a processor 300 generates a plurality of two-dimensional local images of an object OBJ by combining N one-dimensional images consecutively generated when a vision sensor 100 scans the object OBJ moving through a conveyor CVY in a unit of lines to generate a two-dimensional local image, and preprocesses each of the plurality of generated two-dimensional local images (S100).

As described above, the vision sensor 100 is configured to scan the object OBJ in a unit of lines a plurality of times to generate a plurality of one-dimensional images, and the one-dimensional images generated by the vision sensor 100 are stored in a buffer. Accordingly, in operation S100, the processor 300 generates the plurality of two-dimensional local images of the object OBJ by repeatedly performing an operation of generating a two-dimensional local image when N one-dimensional images are generated by the vision sensor 100. In this case, when the N one-dimensional images are stored in the buffer, the processor 300 reads the N one-dimensional images from the buffer and combines the N one-dimensional images to generate one two-dimensional local image and then preprocesses the generated two-dimensional local image.

In addition, in operation S100, the processor 300 preprocesses each of the plurality of two-dimensional local images by repeatedly performing an operation of reading the N one-dimensional images from the buffer and combining the N one-dimensional images to generate the one two-dimensional local image and then preprocessing the one two-dimensional local image when the N one-dimensional images are stored in the buffer.

When a currently generated two-dimensional local image and a subsequently generated two-dimensional local image are defined as first and second two-dimensional local images, respectively, a preprocessing operation of the first two-dimensional local image by the processor 300 and a scan operation of generating, by the vision sensor 100, the N one-dimensional images which are for generating the second two-dimensional local image, are performed in parallel.

Further, in operation S100, the processor 300 may remove noise from a defect inspection portion of the object OBJ by applying a two-dimensional filtering algorithm to each two-dimensional local image, and, in an embodiment, a ghost filter may be adopted for the two-dimensional filtering algorithm.

When the preprocessing of the plurality of two-dimensional local images is completed through operation S100, the processor 300 detects defects of the object OBJ based on the plurality of two-dimensional local images preprocessed in operation S100 (S200).

In an embodiment, in operation S200, the processor 300 combines the plurality of preprocessed two-dimensional local images to generate a two-dimensional global image showing an entire exterior of the object OBJ and detects defects of the object OBJ using the generated two-dimensional global image. In an embodiment, the processor 300 detects defects of the object OBJ by inputting the two-dimensional global image to a pre-trained neural network model to detect defects of the object OBJ and checking the output thereof.

According to one or more embodiments of the present disclosure, by adopting a method in which, when defects of a battery is performed using a line scan camera, a plurality of one-dimensional images consecutively generated when an object is scanned in a unit of lines are combined to generate a two-dimensional local image, the generated two-dimensional local image is preprocessed, and then defects of the object are detected based on the preprocessed two-dimensional local image, wherein a line unit scanning operation of generating a one-dimensional image and a preprocessing operation of a two-dimensional local image are performed in parallel (e.g., concurrently or simultaneously), as compared to a method of inspecting defects of an object through preprocessing of a two-dimensional global image that shows the entire exterior of the object, a time required for inspecting defects can be shortened, and, thus, production per minute can be improved.

However, aspects and effects that can be achieved through the present invention are not limited to the above-described aspects and effects and other aspects and effects that are not described may be clearly understood by those skilled in the art from the detailed description.

Implementations described herein may be implemented in, for example, a method or process, an apparatus, a software program, a data stream, or a signal. Although discussed in the context of a single form of implementation (e.g., discussed as a method), implementations of the discussed features may also be implemented in other forms (for example, an apparatus or a program). The apparatus may be implemented in suitable hardware, software, firmware, and the like. A method may be implemented in an apparatus such as a processor, which is generally a computer, a microprocessor, an IC, a processing device including a programmable logic device, or the like. Processors also include communication devices, such as a computer, a cell phone, a portable/personal digital assistant ("PDA"), and other devices that facilitate communication of information between end-users.

Although the present disclosure has been described with reference to some embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents.

Further Embodiments are set out in the following clauses:
Clause 1. An apparatus for inspecting an object, the apparatus comprising:
   a vision sensor configured to scan a moving object in a unit of lines to generate a one-dimensional image; and
   a processor configured to generate a plurality of two-dimensional local images of the object by combining N one-dimensional images consecutively generated by the vision sensor to generate a two-dimensional local image, preprocess each of the plurality of generated two-dimensional local images, and detect defects of the object based on the plurality of preprocessed two-dimensional local images, wherein N is a natural number greater than or equal to 2.
Clause 2. The apparatus according to clause 1, wherein the vision sensor is configured to scan the object in a unit of lines a plurality of times to generate a plurality of one-dimensional images, and
   the processor is configured to generate the plurality of two-dimensional local images of the object by repeatedly performing an operation of generating the two-dimensional local image when the N one-dimensional images are generated by the vision sensor.
Clause 3. The apparatus according to clause 2, further comprising a memory comprising a buffer,
   wherein the one-dimensional image generated by the vision sensor is stored in the buffer, and
   when the N one-dimensional images are stored in the buffer, the processor is configured to read the N one-dimensional images from the buffer and combine the N one-dimensional images to generate the two-dimensional local image, and then preprocess the generated two-dimensional local image.
Clause 4. The apparatus according to clause 3, wherein the processor is configured to preprocess each of the plurality of two-dimensional local images by repeatedly performing an operation of reading the N one-dimensional images from the buffer, combine the N one-dimensional images to generate the one two-dimensional local image, and then preprocesses the one two-dimensional local image when the N one-dimensional images are stored in the buffer.
Clause 5. The apparatus according to any one of clauses 2 - 4, wherein, when a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are for generating the second two-dimensional local image, are performed in parallel.
Clause 6. The apparatus according to any preceding clause, wherein the processor is configured to perform the preprocessing by removing noise from a defect inspection portion of the object by applying a two-dimensional filtering algorithm to each two-dimensional local image.
Clause 7. The apparatus according to any preceding clause, wherein, when the preprocessing of the plurality of two-dimensional local images is completed, the processor is configured to combine the plurality of preprocessed two-dimensional local images to generate a two-dimensional global image showing an entire exterior of the object and detect the defects of the object using the generated two-dimensional global image.
Clause 8. The apparatus according to clause 7, wherein the processor is configured to detect the defects of the object by inputting the two-dimensional global image to a neural network model pre-trained to detect the defects of the object and checking an output thereof.
Clause 9. The apparatus according to any preceding clause, wherein the vision sensor comprises a line scan camera,
   the object comprises a battery which moves through a conveyor in a manufacturing process, and
   the defects of the object include defects of a weld of the battery.
Clause 10. A method of inspecting an object, the method comprising:
   generating, by a processor, a plurality of two-dimensional local images of an object by combining N one-dimensional images, which are consecutively generated by a vision sensor configured to scan a moving object in a unit of lines and generate a one-dimensional image, to generate a two-dimensional local image, and preprocessing each of the plurality of generated two-dimensional local images; and
   detecting, by the processor, defects of the object based on the plurality of preprocessed two-dimensional local images.
Clause 11. The method according to clause 10, wherein the vision sensor is configured to scan the object in a unit of lines a plurality of times to generate a plurality of one-dimensional images, and
   in the preprocessing, the processor generates the plurality of two-dimensional local images of the object by repeatedly performing an operation of generating the one two-dimensional local image when the N one-dimensional images are generated by the vision sensor.
Clause 12. The method according to clause 11, wherein the one-dimensional image generated by the vision sensor is stored in a buffer, and
   in the preprocessing, when the N one-dimensional images are stored in the buffer, the processor reads the N one-dimensional images from the buffer and combines the N one-dimensional images to generate the two-dimensional local image and then preprocesses the generated two-dimensional local image,
   wherein, in the preprocessing, the processor preprocesses each of the plurality of two-dimensional local images by repeatedly performing an operation of reading the N one-dimensional images from the buffer, combining the N one-dimensional images to generate the two-dimensional local image, and then preprocessing the two-dimensional local image when the N one-dimensional images are stored in the buffer.
Clause 13. The method according to clause 11 or clause 12, wherein, when a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are required for generating the second two-dimensional local image, are performed in parallel.
Clause 14. The method according to any one of clauses 10 - 13, wherein, in the preprocessing, the processor performs the preprocessing by removing noise from a defect inspection portion of the object by applying a two-dimensional filtering algorithm to each two-dimensional local image.
Clause 15. The method according to any one of clauses 10 - 14, wherein, in the detecting, the processor combines the plurality of preprocessed two-dimensional local images to generate a two-dimensional global image showing an entire exterior of the object and detects the defects of the object using the generated two-dimensional global image,
   wherein, in the detecting, the processor detects the defects of the object by inputting the two-dimensional global image to a neural network model pre-trained to detect the defects of the object and checking an output thereof.

## Claims

1. An apparatus for inspecting an object, the apparatus comprising:
a vision sensor configured to scan a moving object in a unit of lines to generate a one-dimensional image; and
a processor configured to generate a plurality of two-dimensional local images of the object by combining N one-dimensional images consecutively generated by the vision sensor to generate a two-dimensional local image, preprocess each of the plurality of generated two-dimensional local images, and detect defects of the object based on the plurality of preprocessed two-dimensional local images, wherein N is a natural number greater than or equal to 2.

2. The apparatus as claimed in claim 1, wherein the vision sensor is configured to scan the object in a unit of lines a plurality of times to generate a plurality of one-dimensional images, and
the processor is configured to generate the plurality of two-dimensional local images of the object by repeatedly performing an operation of generating the two-dimensional local image when N one-dimensional images are generated by the vision sensor.

3. The apparatus as claimed in claim 2, further comprising a memory comprising a buffer,
wherein each one-dimensional image generated by the vision sensor is stored in the buffer, and
when N one-dimensional images are stored in the buffer, the processor is configured to read the N one-dimensional images from the buffer and combine the N one-dimensional images to generate a two-dimensional local image of the plurality of two-dimensional local images, and then preprocess the generated two-dimensional local image.

4. The apparatus as claimed in claim 3, wherein the processor is configured to preprocess each of the plurality of two-dimensional local images by repeatedly performing an operation of reading N one-dimensional images from the buffer, combine the read N one-dimensional images to generate the one two-dimensional local image, and then preprocesses the one two-dimensional local image when the N one-dimensional images are stored in the buffer.

5. The apparatus as claimed in any one of claims 2 - 4, wherein, when a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are for generating the second two-dimensional local image, are performed in parallel.

6. The apparatus as claimed in any preceding claim, wherein the processor is configured to perform the preprocessing by removing noise from a defect inspection portion of the object by applying a two-dimensional filtering algorithm to each two-dimensional local image.

7. The apparatus as claimed in any preceding claim, wherein, when the preprocessing of the plurality of two-dimensional local images is completed, the processor is configured to combine the plurality of preprocessed two-dimensional local images to generate a two-dimensional global image showing an entire exterior of the object and detect the defects of the object using the generated two-dimensional global image.

8. The apparatus as claimed in claim 7, wherein the processor is configured to detect the defects of the object by inputting the two-dimensional global image to a neural network model pre-trained to detect the defects of the object and checking an output thereof.

9. The apparatus as claimed in any preceding claim, wherein the vision sensor comprises a line scan camera,
the object comprises a battery which moves through a conveyor in a manufacturing process, and
the defects of the object include defects of a weld of the battery.

10. A method of inspecting an object, the method comprising:
generating, by a processor, a plurality of two-dimensional local images of an object by combining N one-dimensional images, the N one-dimensional images being consecutively generated by a vision sensor configured to scan a moving object in a unit of lines and generate a one-dimensional image, to generate a two-dimensional local image, and preprocessing each of the plurality of generated two-dimensional local images; and
detecting, by the processor, defects of the object based on the plurality of preprocessed two-dimensional local images.

11. The method as claimed in claim 10, wherein the vision sensor is configured to scan the object in a unit of lines a plurality of times to generate a plurality of one-dimensional images, and
in the preprocessing, the processor generates the plurality of two-dimensional local images of the object by repeatedly performing an operation of generating the one two-dimensional local image when N one-dimensional images are generated by the vision sensor.

12. The method as claimed in claim 11, wherein each one-dimensional image generated by the vision sensor is stored in a buffer, and
in the preprocessing, when N one-dimensional images are stored in the buffer, the processor reads the N one-dimensional images from the buffer and combines the N one-dimensional images to generate a two-dimensional local image of the plurality of two-dimensional local images, and then preprocesses the generated two-dimensional local image,
wherein, in the preprocessing, the processor preprocesses each of the plurality of two-dimensional local images by repeatedly performing an operation of reading N one-dimensional images from the buffer, combining the read N one-dimensional images to generate the two-dimensional local image, and then preprocessing the two-dimensional local image when the N one-dimensional images are stored in the buffer.

13. The method as claimed in claim 11 or claim 12, wherein, when a currently generated two-dimensional local image and a subsequentially generated two-dimensional local image are defined as a first two-dimensional local image and a second two-dimensional local image, respectively, a preprocessing operation of the first two-dimensional local image by the processor and a scan operation of generating, by the vision sensor, the N one-dimensional images which are required for generating the second two-dimensional local image, are performed in parallel.

14. The method as claimed in any one of claims 10 - 13, wherein, in the preprocessing, the processor performs the preprocessing by removing noise from a defect inspection portion of the object by applying a two-dimensional filtering algorithm to each two-dimensional local image.

15. The method as claimed in any one of claims 10 - 14, wherein, in the detecting, the processor combines the plurality of preprocessed two-dimensional local images to generate a two-dimensional global image showing an entire exterior of the object and detects the defects of the object using the generated two-dimensional global image,
wherein, in the detecting, the processor detects the defects of the object by inputting the two-dimensional global image to a neural network model pre-trained to detect the defects of the object and checking an output thereof.
